# FASCICULE DE BREVET EUROPEEN

(11) **EP 0 908 419 B1**
(45) Date de publication et mention de la délivrance du brevet: **10.09.2003**
(21) Numéro de dépôt: 98420176.4
(22) Date de dépôt: 08.10.1998
(51) Int. Cl.: C03B 35/04, C03B 27/06

(54) **Support pour la trempe de pièces de verrerie**
Träger zum Härten von Glasgegenständen
Support for tempering glass objects

(30) Priorité: 09.10.1997 FR 9712850
(43) Date de publication de la demande: 14.04.1999
(73) Titulaire: Réfractaires et Concepts Céramiques, 41600 Lamotte Beuvron (FR)
(72) Inventeur: Martinat, Eric, 41200 Pruneir en Sologne (FR)
(74) Mandataire: Hubert, Philippe

(56) Documents cités:
- MYRON HENRY WARDELL,JR.: "Fixture for carrying glass panels through lehr" R.C.A. TECHNICAL NOTES, no. 1291, 21 janvier 1982, pages 1-2, XP002068709 NEW JERSEY,USA
- Annawerk-Brennhilfsmittel (www.abis-gmbh.com/brennh.../brennhilfsmittel-a- nnawerk.html)
- Feuerfest-Systeme, Brennhilfsmittel (www.steuler.de/feuer/brennh/brennh.htm)
- J. HOFFMANN: "Technologie der Feinkeramik", 1979, VEB VERLAG FüR GRUNDSTOFFINDUSTRIE , LEIBZIG
- Haldenwnager, Brennhilfsmittel (www.haldenwanger.de/fred/abb/halsic.pdf; Seite 5)
- Feuerfest-Systeme, Brennhilfsmittel (www.steuler.de/feuuer/brennh/brennh.htm)
- J. HOFFMANN: "Technologie der Feinkeramik", 1979, VEB VERLAG FüR GRUNDSTOFFINDUSTRIE, LEIBZIG
- HOFFMANN J.: "Technologie der Feinkeramik", 1979, VEB VERLAG FOR GRUNDSTOFFINDUSTRIE, LEIBZIG

## Description

La présente invention a pour objet un support pour la trempe de pièces de verrerie.

Pour améliorer la qualité de pièces en verre, notamment de verre d'optiques de phares de véhicules, il est connu de faire subir à ces pièces un traitement thermique, appelé trempe. Ce traitement thermique consiste en une montée en température suivie d'un refroidissement brutal à l'air. A cet effet, les pièces en verre sont disposées sur des supports, constitués par des claies métalliques très ajourées, et circulent dans un four où, après avoir été amenées à la température nécessaire, elles sont refroidies brutalement à l'air.

Une difficulté essentielle réside dans l'incapacité des claies métalliques à conserver une stabilité de leur géométrie lors de l'échauffement. De plus, ces claies sont réalisées par assemblage de différentes pièces soudées entre elles. Cet assemblage est d'autant plus complexe que le profil de la pièce à tremper est lui-même complexe. L'assemblage de pièces métalliques provoque des contraintes qui, lors de la mise en température, accentuent les déformations.

Or, il est indispensable, dans un certain nombre d'applications, de conserver la géométrie de la pièce de verrerie à tremper, ce qui nécessite de disposer d'un support possédant une parfaite stabilité de sa géométrie lors de la montée en température.

Le but de l'invention est donc de fournir un support pour pièces de verrerie, dont les propriétés thermomécaniques ne se dégradent pas avec la température, et qui ne se déforme pas aux températures nécessaires pour réaliser la trempe du verre.

A cet effet, le support qu'elle concerne, est réalisé en matériau céramique réfractaire possédant une forme générale adaptée à celle d'une pièce à tremper, possédant des évidements et/ou des ouvertures destinés à lui procurer une faible masse pour éviter un effet de masque ayant une influence sur la trempe de la pièce, et possédant des zones rectifiées contre lesquelles la pièce est destinée à venir en appui.

Suivant une forme d'exécution, ce support est constitué par une couronne dont la forme, vue en élévation, suit la forme de la pièce à tremper, la partie supérieure de la couronne comportant des zones rectifiées destinées à servir à l'appui de la pièce, cette couronne étant associée à un fond possédant une structure en nid d'abeille très ajouré.

Cette structure permet au support de disposer d'une très faible inertie thermique, et de laisser passer librement les flux d'air chaud générés au cours de la trempe.

Suivant une autre caractéristique de l'invention, la couronne présente des évidements débouchant vers le haut délimitant des plots qui servent à l'appui de la pièce. Cette caractéristique limite encore l'inertie thermique du support, et favorise la circulation du flux d'air, améliorant ainsi les conditions de la trempe.

Dans le cas de son application au support d'un verre d'optique de phare d'automobile ou similaire, ce support possède une forme générale correspondant au pourtour du verre et comporte des zones rectifiées servant à l'appui du bord du verre.

De toute façon, l'invention sera bien comprise à l'aide de la description qui suit, en référence au dessin schématique annexé représentant, à titre d'exemple non limitatif, une forme d'exécution de ce support, destinée à la trempe d'un verre de phare pour optique de véhicule :
Figure 1 est une vue en perspective de ce support ;
Figure 2 en est une vue en coupe transversale, le verre destiné à être trempé étant représenté en trait mixte.

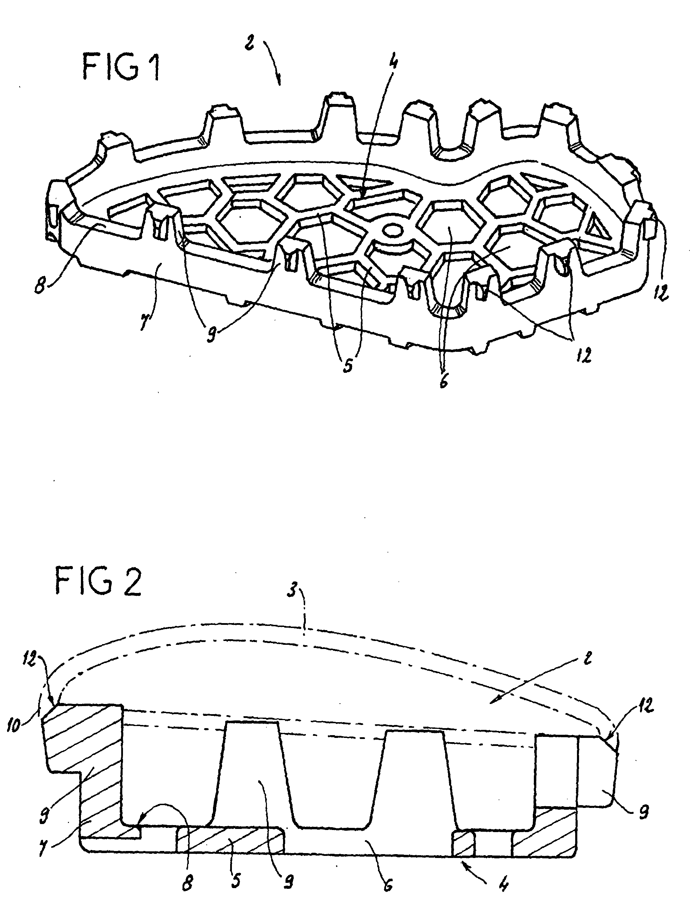

La figure 1 représente un support 2 pour un verre 3 d'optique de véhicule automobile.

Ce support, réalisé en matériau céramique réfractaire, dont les propriétés thermomécaniques ne se dégradent pas avec la température, et ne présentant aucune déformation à la température nécessaire à la trempe, comporte un fond 4, en nid d'abeille, constitué par des barrettes 5 délimitant des ouvertures 6, la surface des ouvertures 6 étant importante vis-à-vis de celles des barrettes 5. Le fond 4 est entouré par une couronne 7, dans laquelle sont ménagés des évidements 8 débouchant vers le haut, délimitant des plots 9. Le profil du fond 4 et de la couronne 7 correspond sensiblement au profil du bord 10 du verre 3. Les plots 9 présentent, dans leurs parties supérieures, des surfaces rectifiées 12 servant de points d'appui au bord du verre 10. L'ensemble de ces points d'appui 12 constitue dans l'espace, un profil déterminé dont la précision est garantie.

Il résulte de cette structure que le support ne subit aucune déformation lors d'une élévation à la température de trempe du verre, qu'il possède une très faible inertie thermique n'influençant pas le traitement thermique du produit par effet d'inertie, et qu'il est très ajouré, permettant la circulation du flux d'air lors de la trempe. Enfin, il possède au niveau des zones rectifiées 12 une parfaite géométrie correspondant à celle du verre 3.

Il est ainsi possible d'obtenir des verres trempés bénéficiant d'une excellente géométrie, ce qui est avantageux, notamment pour les verres d'optique de phare, particulièrement si l'on envisage un collage du verre sur le bloc optique, la fixation du verre sur l'optique au moyen d'un collage exigeant un jeu calibré et régulier.

Comme il va de soi, l'invention ne se limite pas à la seule forme d'exécution de ce support, décrite ci-dessus à titre d'exemple, elle en embrasse au contraire toutes les variantes. C'est ainsi notamment que la forme du support pourrait être différente pour pouvoir être adaptée à d'autres articles, que les plots pourraient être non pas disposés en couronne mais selon une autre géométrie, pour s'adapter au produit à soutenir, sans que l'on sorte pour autant du cadre des revendications suivantes.

## Revendications

1. Support pour la trempe de pièces de verrerie, **caractérisé en ce qu'**il est réalisé en matériau céramique réfractaire et **en ce qu'**il comporte un fond (4) présentant des ouvertures et duquel se détache une couronne (7) conformée pour suivre un contour d'une pièce à tremper précitée, et **en ce que** cette couronne possède à sa partie supérieure des zones rectifiées (12) contre lesquelles la pièce vient prendre appui.

2. Support selon la revendication 1, **caractérisé en ce que** ledit fond (4) possède une structure (5, 6) en nid d'abeille très ajouré.

3. Support selon l'une des revendications précédentes, **caractérisé en ce que** ladite couronne présente des évidements (8) débouchant vers le haut et délimitant des plots (9) sur lesquels ladite pièce (3) prend appui.

4. Support selon la revendication 3, **caractérisé en ce que** lesdites zones rectifiées sont situées sur lesdits plots.

5. Support selon l'une des revendications précédentes, **caractérisé en ce que**, dans le cas de son application à la trempe d'un verre (3) d'optique de phare d'automobile ou similaire, ladite couronne possède une forme générale correspondant au pourtour (10) dudit verre et comporte des zones rectifiées (12) précitées, sur lesquelles ledit verre vient prendre appui.

## Claims

1. Support for the tempering of glass components, **characterised in that** it is made of refractory ceramic material and **in that** it comprises a bottom (4) having openings and from which is detached a crown (7) shaped so as to follow an outline of an aforesaid component to be tempered, and **in that** this crown has, in its upper part, rectified areas (12) against which the component bears.

2. Support according to Claim 1, **characterised in that** said bottom (4) has a structure (5, 6) like a honeycomb with many cut-outs.

3. Support according to one of the preceding claims, **characterised in that** said crown has cavities (8) opening upwards, and delimiting studs (9) against which said component (3) bears.

4. Support according to Claim 3, **characterised in that** said rectified areas are located on said studs.

5. Support according to one of the preceding claims, **characterised in that**, where it is applied to the tempering of a vehicle headlight insert glass (3) or the like, said crown has a general shape corresponding to the periphery (10) of said glass and comprises aforesaid rectified areas (12), against which said glass bears.

## Patentansprüche

1. Halterung zum Härten von Glasgegenständen, **dadurch gekennzeichnet, dass** die Halterung aus einem keramischen feuerfesten Material hergestellt ist und dass sie einen Boden (4) aufweist, in dem Öffnungen ausgebildet sind und von dem eine Krone (7) hervorsteht, die einer Kontur des genannten zu härtenden Gegenstands folgt, und dass diese Krone in ihrem oberen Bereich begradigte Zonen (12) aufweist, gegen welche der Gegenstand anstoßen kann.

2. Halterung nach Anspruch 1, **dadurch gekennzeichnet, dass** der Boden (4) eine sehr ausgenommene wabenförmige Struktur (5, 6) aufweist.

3. Halterung nach einem der vorangehenden Ansprüche, **dadurch gekennzeichnet, dass** die Krone Ausnehmungen (8) aufweist, die nach oben hin münden und Klötze (9) begrenzen, gegen welche der Gegenstand (3) anstoßen kann.

4. Halterung nach Anspruch 3, **dadurch gekennzeichnet, dass** die begradigten Zonen an den Klötzen vorgesehen sind.

5. Halterung nach einem der vorangehenden Ansprüche, **dadurch gekennzeichnet, dass** im Falle der Verwendung für das Härten eines optischen Glases (3) für einen Automobilscheinwerfer oder einen ähnlichen Scheinwerfer die Krone eine allgemeine Form aufweist, die dem Außenumfang (10) dieses Glases entspricht und die begradigten Zonen (12) aufweist, gegen welche das Glas anstoßen kann.
